# EUROPEAN PATENT APPLICATION

(11) **EP 2 354 895 A1**
(43) Date of publication of application: **10.08.2011**
(21) Application number: 10151899.1
(22) Date of filing: 28.01.2010
(51) Int. Cl.: G06F 3/02, G06F 3/023, G09B 21/00, G06F 3/041, G06F 3/01, G06F 3/048

(54) **Touch sensitive display device**

(71) Applicant: Hannspree, Inc., Taipei City (TW)
(72) Inventor: Tsai, Stephen, Taipei City (TW); Liou, Guan-De, Taipei City (TW); Lai, Li-Li, Taipei City (TW); Hwang, Shao-Yu, Taipei City (TW)
(74) Representative: Viering, Jentschura & Partner

(57) **Abstract**

A touch sensitive display device is capable of forming a physical button, and includes: a touch sensitive display including a display face, for performing display based on display data on the display face; and a light-transmissive first film disposed on the display face of the touch sensitive display, and including a first part and a second part that is formed from a resilient material, the first part being disposed on the display face, the second part cooperating with the display face to define a first containing chamber, that is convertible between a contracted state and an expanded state, in which the second part protrudes relative to the first part such that the second part is more distinguishable from the first part by touch when compared to the contracted state, based on the display data.

## Description

### BACKGROUND

### Technical Field

This invention relates to a touch sensitive display device, more particularly to a touch sensitive display device capable of forming physical buttons.

### Related Art

Touch sensitive displays are applied extensively in many types of electronic devices, serving as both a display and input medium. As an input medium, the touch sensitive display is superior to a keyboard capable of displaying virtual buttons and options to a user, which the user can select by touching. However, a flat display of the conventional touch sensitive display presents a drawback, since sense of touch cannot be relied upon in finding a position of a virtual button or an option displayed on the screen. Unlike physical buttons the user can feel the locations, shapes and sizes of the button. Therefore, many people (the visually impaired and elderly in particular) often accidentally selected wrong virtual buttons or options.

### SUMMARY

Therefore, an object of the present invention is to provide a touch sensitive display device that is capable of forming physical buttons.

According to the present invention, there is provided a touch sensitive display device comprising a touch sensitive display and a light-transmissive first film.

The touch sensitive display includes a display face, and is for performing display based on display data on the display face. The light-transmissive first film is disposed on the display face of the touch sensitive display, and includes a first part and a second part that is formed from a resilient material. The first part is disposed on the display face, and the second part cooperates with the display face to define a first containing chamber that is convertible between a contracted state, and an expanded state, in which the second part protrudes relative to the first part such that the second part is more distinguishable from the first part by touch when compared to the contracted state, based on the display data.

Through adding the first film, which cooperates with the display face of the touch sensitive display to define the first containing chamber, and converting the first containing chamber to the expanded state, this invention forms a physical button on the display face of the touch sensitive display of the touch control display device.

### BRIEF DESCRIPTION OF THE DRAWINGS

Other features and advantages of the present invention will become apparent in the following detailed description of the preferred embodiments with reference to the accompanying drawings, of which:
Figure 1 is a schematic block diagram illustrating a first preferred embodiment of the touch sensitive display device according the present invention;
Figures 2(a) and 2(b) are schematic diagrams to illustrate conversion of a containing chamber of the first preferred embodiment between contracted and expanded states;
Figures 3(a) and 3(b) are schematic diagrams of a second preferred embodiment of the touch sensitive display device according to the present invention, illustrating conversion of a containing chamber between contracted and expanded states;
Figures 4(a) and 4(b) illustrate an application of the preferred embodiment in a cellular phone;
Figures 5(a) and 5(b) illustrate another application of the preferred embodiment in a cellular phone;
Figure 6 illustrates display of a pattern corresponding to multiple containing chambers; and
Figures 7(a) and 7(b) illustrate yet another application of the preferred embodiment in a cellular phone.

### DETAILED DESCRIPTION

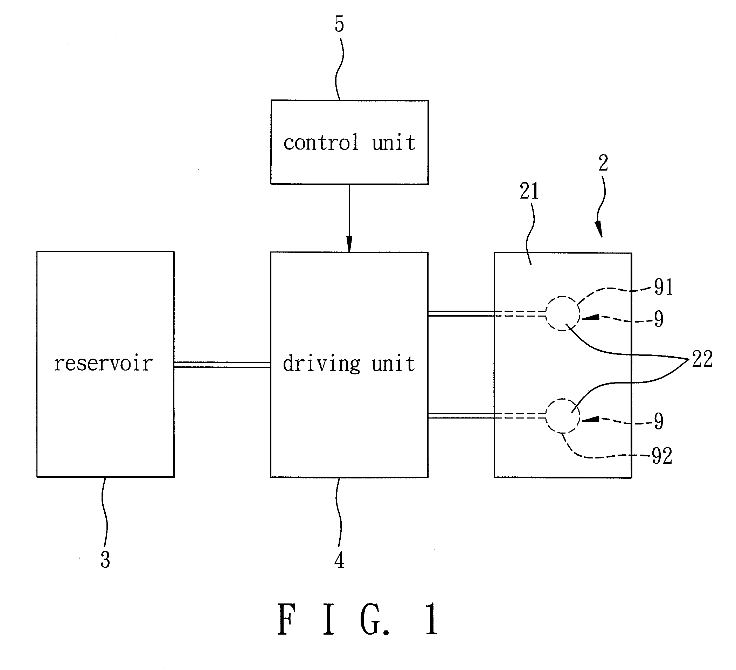

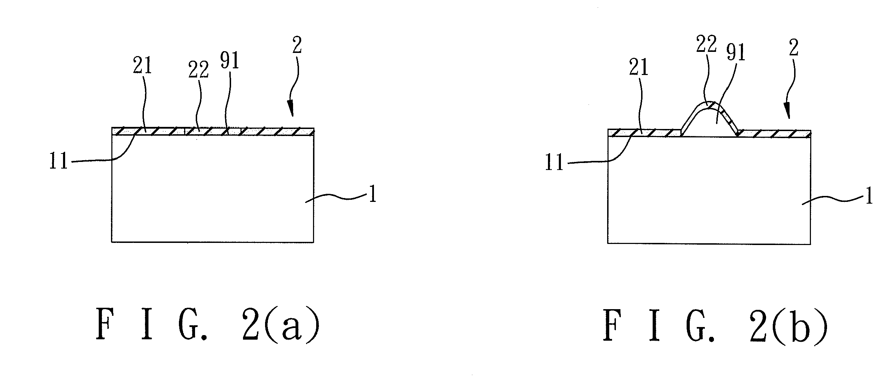

Figures 1, 2(a) and 2(b) illustrate the first preferred embodiment of the touch sensitive display device according to the present invention. The touch sensitive display device comprises a touch sensitive display 1, a light-transmissive first film 2, a reservoir 3, a driving unit 4 and a control unit 5.

The touch sensitive display 1 includes a display face 11 and is for performing display based on display data including option data on the display face 11. The first film 2 is disposed on the display face 11 of the touch sensitive display 1, and includes a first part 21 and a second part 22 that is formed from a resilient material. In this embodiment, the first part 21 is disposed fixedly on the display face 11. The second part 22 cooperates with the display face 11 to define (N) containing chambers 9, wherein (N) is a positive integer. The containing chambers 9 are convertible between a contracted state (see Figure 2(a)), in which the second part 22 is substantially flush with the first part 21, and an expanded state (see Figure 2(b)), in which the second part 22 protrudes relative to the first part 21 such that the second part 22 is more distinguishable from the first part 21 by touch when compared to the contracted state, based on the display data. It should be noted that the first film 2 can be either colored or non-colored, and the first and second parts 21, 22 can be formed from a same material or from different materials.

In the description that follows, (N)=2, and the two containing chambers 9 are referred to as the first containing chamber 91 and the second containing chamber 92.

The reservoir 3 is for storing a fluid such as gas or liquid. The driving unit 4 is coupled to the first containing chamber 91, the second containing chamber 92 and the reservoir 3 for controlling the following based on a control signal: fluid communication between the first containing chamber 91 and the reservoir 3, and a direction in which the fluid flows between the first containing chamber 91 and the reservoir 3 when the first containing chamber 91 and the reservoir 3 are in fluid communication; and fluid communication between the second containing chamber 92 and the reservoir 3, and a direction in which the fluid flows between the second containing chamber 92 and the reservoir 3 when the second containing chamber 92 and the reservoir 3 are in fluid communication. The control unit 5 is coupled to the driving unit 4 for generating the control signal based on the display data.

The first containing chamber 91 is converted to the expanded state when the driving unit 4 controls the fluid to flow from the reservoir 3 into the first containing chamber 91, and to the contracted state when the driving unit 4 controls the fluid to flow from the first containing chamber 91 into the reservoir 3. When the first containing chamber 91 and the reservoir 3 are not in fluid communication, the first containing chamber 91 maintains its current state. When the first containing chamber 91 is in the expanded state, a protrusion is formed on the display face 11 of the touch sensitive display 1, as shown in Figure 2(b). When the first containing chamber 91 is in the contracted state, no protrusion or a comparatively slight protrusion is formed on the display face 11 of the touch sensitive display 1, as shown in Figure 2(a). The second containing chamber 92 has the same characteristics.

Therefore, when the containing chamber 91 corresponds in position to a virtual button or an option on the display face 11, the display face 11 displays a virtual button or the option based on the option data and the containing chamber 91 is converted to the expanded state, a physical button is formed on the display face 11. On the other hand, when the display face 11 does not display a virtual button or an option, the containing chamber 91 is converted to the contracted state, so that no button is formed.

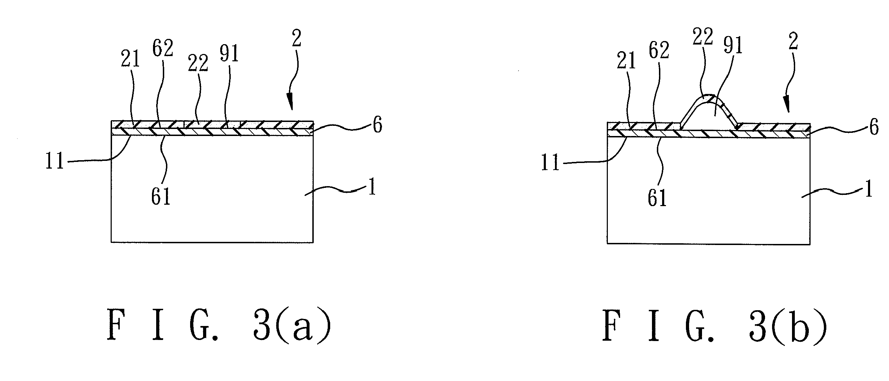

Figures 1, 3(a) and 3(b) illustrate a second preferred embodiment of the touch sensitive display device according to the present invention. The second preferred embodiment is similar to the first preferred embodiment, with the exception that the second preferred embodiment further comprises a light-transmissive second film 6.
The second film 6 is disposed between the first film 2 and the display face 11 of the touch sensitive display 1, and includes a first surface 61 and a second surface 62. The first surface 61 is disposed fixedly on the display face 11. A part of the second surface 62 has the first part 21 of the first film 2 disposed fixedly thereon. Another part of the second surface 62 cooperates with the second part 22 of the first film 2 to form the first containing chamber 91. It is noted that, like the first film 2, the second film 6 can be either colored or non-colored.

One of the merits of the preferred embodiments is that they can be applied in a cellular phone.

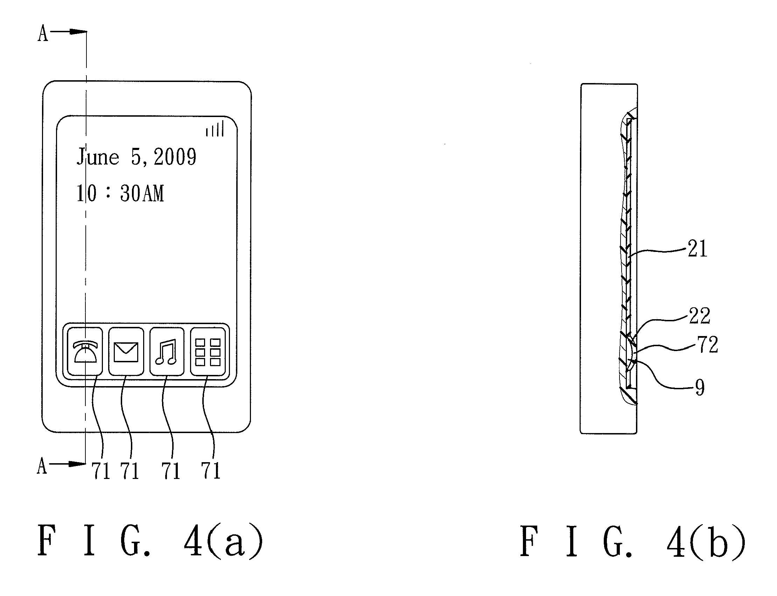

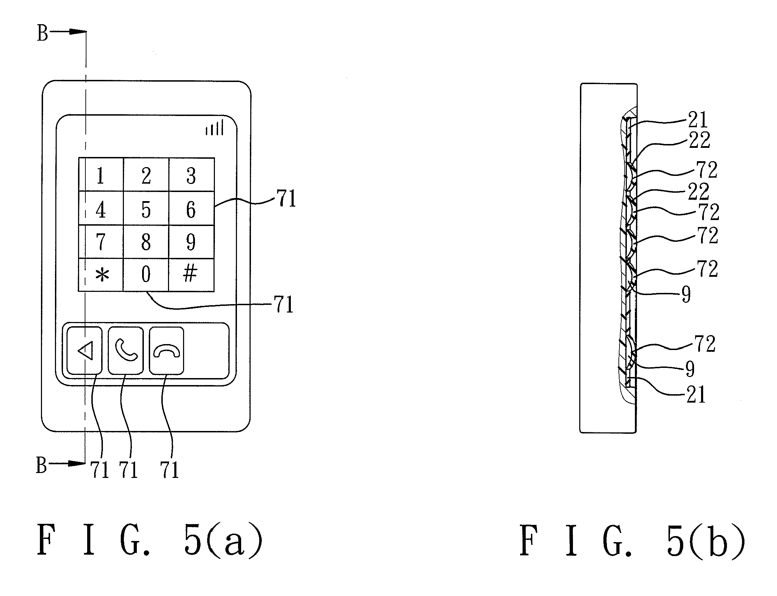

Referring to Figures 4(a), 4(b), 5(a) and 5(b), the containing chambers 9 have been configured in advance so as to correspond in position and quantity to the option data included in the display data, and rules by which the control unit 5 generates the control signal based on the display data have also been determined in advance. When the display face 11 displays the display data shown in Figure 4(a), the control unit 5 controls the driving unit 4 to convert the four containing chambers 9 corresponding to the four virtual buttons 71 to the expanded state so that four physical buttons are formed on the display face 11, as shown in a cutaway view taken along line A-A in Figure 4(b). Hence a user (including one who is visually impaired) can now detect the positions of the four virtual buttons 71 displayed on the display face 11 through sense of touch, the incidence of choosing the wrong button is reduced. Referring to Figures 4(a) and 4(b), when the physical button 72 corresponding to a telephone function button 71 is pressed, the display face 11 displays number keypad and call virtual buttons 71 as shown in Figure 5(a), and the control unit 5 controls the driving unit 4 to convert the containing chambers 9 corresponding to the number keypad and call virtual buttons 71 to the expanded state so that the physical buttons 72 are formed on the display face 11, as shown in a cutaway view taken along line B-B in Figure 5(b).

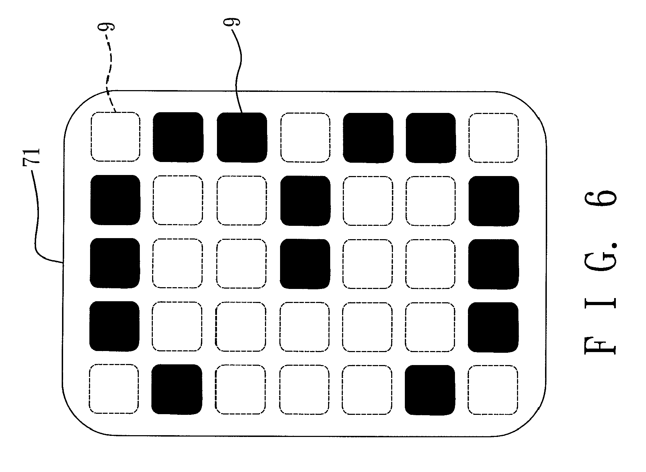

Referring to Figures 4(a), 4(b), 5(a), 5(b) and 6, although each of the containing chambers 9 corresponds to exactly one of the virtual buttons 71 that is displayed on the display face 11 based on the option data, as shown in Figures 4(a), 4(b), 5(a) and 5(b), it is worth noting that a plurality of the containing chambers 9 can be configured to correspond to a pattern displayed on the display face 11 based on the display data. Therefore, when the pattern is displayed on the display face 11, and the containing chambers 9 corresponding to the pattern are converted to the expanded state, a 3D pattern is formed on the display face 11 such as that shown in Figure 6, in which the grey areas indicate formation of a 3D number '3'. Formation of 3D patterns on the display face 11 further enhances applicability of this invention for the visually impaired.

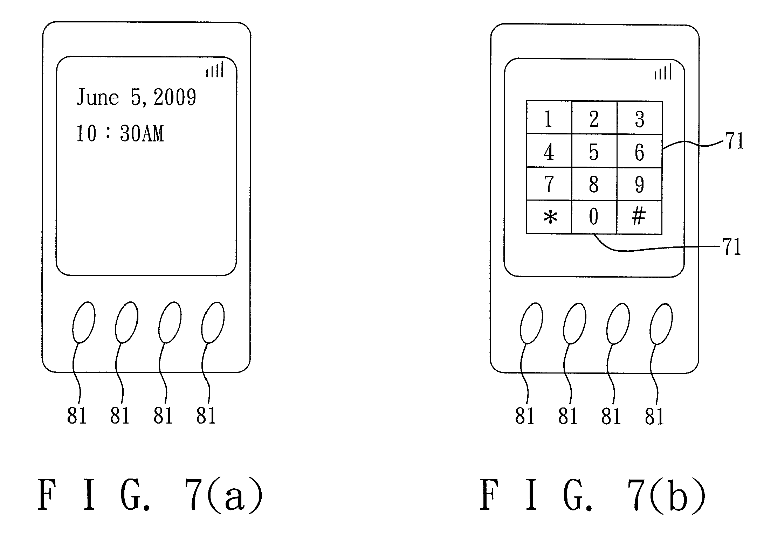

Referring to Figures 7(a) and 7(b), the preferred embodiments can be applied so as to cooperate with buttons 81 that are disposed on a display frame of a cellular phone. When a button 81 corresponding to a telephone function button 81 is pressed, the display face 11 of the touch sensitive display 1 displays the number keypad virtual buttons 71 shown in Figure 7(b), and the control unit 5 controls the driving unit 4 to convert the containing chambers 9 corresponding to the number keypad virtual buttons 71 to the expanded state so that the physical buttons (not shown in the Figure) are formed.

In sum, through adding the first film 2, which cooperates with the display face 11 of the touch sensitive display 1 to define at least one containing chamber 9, and converting the containing chamber 9 to the expanded state, this invention forms the physical button on the display face 11 of the touch sensitive display 1.

While the present invention has been described in connection with what are considered the most practical and preferred embodiments, it is understood that this invention is not limited to the disclosed embodiments but is intended to cover various arrangements included within the spirit and scope of the broadest interpretation so as to encompass all such modifications and equivalent arrangements.

## Claims

1. A touch sensitive display device comprising:
a touch sensitive display (1) including a display face (11), for performing display based on display data on said display face (11); and
a light-transmissive first film (2) disposed on said display face (11) of said touch sensitive display (1), and including a first part (21) and a second part (22) that is formed from a resilient material,
**characterized in that**:
said first part (21) is disposed on said display face (11), said second part (22) cooperates with said display face (11) to define a first containing chamber (91) that is convertible between a contracted state, and an expanded state, in which said second part (22) protrudes relative to said first part (21) such that said second part (22) is more distinguishable from said first part (21) by touch when compared to the contracted state, based on said display data.

2. The touch sensitive display device as claimed in claim 1, further comprising a light-transmissive second film (6) disposed between said first film (2) and said display face (11) of said touch sensitive display (1), and including a first surface (61) and a second surface (62), said first surface (61) being disposed fixedly on said display face (11), a part of said second surface (62) having said first part (21) of said first film (2) disposed fixedly thereon, another part of said second surface (62) cooperating with said second part (22) of said first film (2) to form said first containing chamber (91).

3. The touch sensitive display device as claimed in claim 1, further comprising:
a reservoir (3) for storing a fluid; and
a driving unit (4) coupled to said first containing chamber (91) and said reservoir (3) for controlling, based on a control signal, fluid communication between said first containing chamber (91) and said reservoir (3), and a direction in which said fluid flows between said first containing chamber (91) and said reservoir (3) when said first containing chamber (91) and said reservoir (3) are in fluid communication.

4. The touch sensitive display device as claimed in claim 3, wherein said first containing chamber (91) is converted to the expanded state when said driving unit (4) controls said fluid to flow from said reservoir (3) into said first containing chamber (91), and to the contracted state when said driving unit (4) controls said fluid to flow from said first containing chamber (91) into said reservoir (3).

5. The touch sensitive display device as claimed in claim 3, further comprising a control unit (5) coupled to said driving unit (4) for generating said control signal based on said display data.

6. The touch sensitive display device as claimed in claim 1, wherein said second part (22) of said first film (2) and said display face (11) of said touch sensitive display (1) further cooperate to define a second containing chamber (92).

7. The touch sensitive display device as claimed in claim 6, further comprising:
a reservoir (3) for storing a fluid; and
a driving unit (4) coupled to said first containing chamber (91), said second containing chamber (92) and said reservoir (3) for controlling the following based on a control signal:
fluid communication between said first containing chamber (91) and said reservoir (3), and a direction in which said fluid flows between said first containing chamber (91) and said reservoir (3) when said first containing chamber (91) and said reservoir (3) are in fluid communication; and
fluid communication between said second containing chamber (92) and said reservoir (3), and a direction in which said fluid flows between said second containing chamber (92) and said reservoir (3) when said second containing chamber (92) and said reservoir (3) are in fluid communication.

8. The touch sensitive display device as claimed in claim 1, wherein said display data includes option data, said touch sensitive display (1) displays an virtual button (71) based on said option data, and said virtual button (71) corresponds in position to said first containing chamber (91).

9. The touch sensitive display device as claimed in claim 8, wherein said first containing chamber (91) is converted to the expanded state when said virtual button (71) is displayed by said touch sensitive display (1).

10. The touch sensitive display device as claimed in claim 1, wherein said second part (22) of said first film (2) and said display face (11) of said touch sensitive display (1) further cooperate to define a plurality of containing chambers (9) that are convertible between expanded and contracted states, said touch sensitive display (1) displays a pattern based on said display data, and said plurality of containing chambers (9) are configured to correspond to said pattern.

11. The touch sensitive display device as claimed in claim 10, wherein said plurality of containing chambers (9) are converted to the expanded state when said pattern is displayed by said touch sensitive display (1).

## Amended claims

### Amended claims in accordance with Rule 137(2) EPC.

**1.** A touch sensitive display device comprising:
a touch sensitive display (1) including a display face (11), the touch sensitive display performing display based on display data on said display face (11) and sensing inputs of touch; and
a light-transmissive first film (2) disposed on said display face (11) of said touch sensitive display (1), and including a first part (21) and a second part (22) that is formed from a resilient material,
**characterized in that**:
said first part (21) is disposed directly and fixedly on said display face (11), said second part (22) cooperates with said display face (11) to define a first containing chamber (91) that is convertible between a contracted state, and an expanded state, in which said first containing chamber (91) is filled with a fluid through fluid communication and said second part (22) protrudes relative to said first part (21), with said fluid communication passing through a position other than between said first containing chamber (91) and said display face (1), such that said second part (22) is more distinguishable from said first part (21) by touch when compared to the contracted state, based on said display data.

**2.** The touch sensitive display device as claimed in claim 1, further comprising a light-transmissive second film (6) disposed between said first film (2) and said display face (11) of said touch sensitive display (1), and including a first surface (61) and a second surface (62), said first surface (61) being disposed fixedly on said display face (11), a part of said second surface (62) having said first part (21) of said first film (2) disposed fixedly thereon, another part of said second surface (62) cooperating with said second part (22) of said first film (2) to form said first containing chamber (91).

**3.** The touch sensitive display device as claimed in claim 1, further comprising:
a reservoir (3) for storing said fluid; and
a driving unit (4) coupled to said first containing chamber (91) and said reservoir (3) for controlling, based on a control signal, fluid communication between said first containing chamber (91) and said reservoir (3), and a direction in which said fluid flows between said first containing chamber (91) and said reservoir (3) when said first containing chamber (91) and said reservoir (3) are in fluid communication.

**4.** The touch sensitive display device as claimed in claim 3, wherein said first containing chamber (91) is converted to the expanded state when said driving unit (4) controls said fluid to flow from said reservoir (3) into said first containing chamber (91), and to the contracted state when said driving unit (4) controls said fluid to flow from said first containing chamber (91) into said reservoir (3).

**5.** The touch sensitive display device as claimed in claim 3, further comprising a control unit (5) coupled to said driving unit (4) for generating said control signal based on said display data.

**6.** The touch sensitive display device as claimed in claim 1, wherein said second part (22) of said first film (2) and said display face (11) of said touch sensitive display (1) further cooperate to define a second containing chamber (92).

**7.** The touch sensitive display device as claimed in claim 6, further comprising:
a reservoir (3) for storing a fluid; and
a driving unit (4) coupled to said first containing chamber (91), said second containing chamber (92) and said reservoir (3) for controlling the following based on a control signal:
fluid communication between said first containing chamber (91) and said reservoir (3), and a direction in which said fluid flows between said first containing chamber (91) and said reservoir (3) when said first containing chamber (91) and said reservoir (3) are in fluid communication; and
fluid communication between said second containing chamber (92) and said reservoir (3), and a direction in which said fluid flows between said second containing chamber (92) and said reservoir (3) when said second containing chamber (92) and said reservoir (3) are in fluid communication.

**8.** The touch sensitive display device as claimed in claim 1, wherein said display data includes option data, said touch sensitive display (1) displays an virtual button (71) based on said option data, and said virtual button (71) corresponds in position to said first containing chamber (91).

**9.** The touch sensitive display device as claimed in claim 8, wherein said first containing chamber (91) is converted to the expanded state when said virtual button (71) is displayed by said touch sensitive display (1).

**10.** The touch sensitive display device as claimed in claim 1, wherein said second part (22) of said first film (2) and said display face (11) of said touch sensitive display (1) further cooperate to define a plurality of containing chambers (9) that are convertible between expanded and contracted states, said touch sensitive display (1) displays a pattern based on said display data, and said plurality of containing chambers (9) are configured to correspond to said pattern.

**11.** The touch sensitive display device as claimed in claim 10, wherein said plurality of containing chambers (9) are converted to the expanded state when said pattern is displayed by said touch sensitive display (1).
